# EUROPEAN PATENT APPLICATION

(11) **EP 2 832 272 A1**
(43) Date of publication of application: **04.02.2015**
(21) Application number: 14179496.6
(22) Date of filing: 01.08.2014
(51) Int. Cl.: A47J 31/40, G01F 23/38, G01F 11/24

(54) **Magnetic level indicator device for a not compact solid product in a container**

(30) Priority: 01.08.2013 IT BO20130428
(71) Applicant: GPE Products S.r.l., 61032 Fano (BO) (IT)
(72) Inventor: Peroni, Alessio, I-61032 FANO (PU) (IT); Peroni, Giorgio, I-61032 FANO (PU) (IT)
(74) Representative: Negrini, Elena

(57) **Abstract**

Magnetic level device for signalling a preset level of a not compact solid product housed in a container for such product in an operative condition of the device. Said device (1) comprises a crankshaft means (3) placed inside the container (4) and whose main journal (5) has a horizontal rotation axis fixed with respect to the container (4) and it (5) is rotated around such axis by rotation means (6) at least in such operative condition. The eccentric crankpin (7) of the crankshaft means (3) has the respective horizontal rotation axis parallel to the rotation axis of the main journal (5) and it (7) supports, in a freely rotatable manner, a big end (9) of a connecting rod means (10) which small end (12) bears a magnetic means (14). Said device 81)further comprises a magnetic detector means (15) fixed at least in proximity to the container (4), having a volume (V) of sensitivity range extending inside the container (4) at least of predetermined radius (S) lower than a predetermined maximum value and placed on a geometric plane perpendicular to the rotation axes of the crankshaft means (3) and passing through the central portion of the magnetic means (14). The length (B) of the connecting rod means (10) or rather the distance between the big end (9) and the magnetic means (14) is equal to or greater than the difference between the distance (D) that separates the main journal (5) from said volume (V) of the sensitivity range of the magnetic detector means (15) in the container and the distance (R) between said main journal (5) and the eccentric crankpin (7). In the level checking condition, the presence in the container (4) of material above the predetermined level prevents the approaching and/or the abutment of the magnetic means (14) with the sensitivity range volume of the magnetic detector means (15); if the level is below, the magnetic means (14) can match with or enter into the sensitivity range volume of the magnetic detector means (15), which consequently emits a signal of reaching of said predetermined level.

## Description

The present invention relates to the sector concerning the supply of dust, granules, micropellets, pellets products and similar and in particular relates to a magnetic level indicator device for a not compact solid product in a container.

They are known containers and hoppers for not compact solid materials, for example, dusts, granules, micropellets, sands etc. and assigned to supply with its content machines or equipment of various origin and nature. These known containers can be provided with detectors of a predetermined level, for example of reserve assigned to send, for example to an alarm or to a control center, a signal indicative of the reaching of the reserve level. Generally, such level detectors comprise floating, systems based on load cells or on the counting of the consumption of the kind called at "decounter" or emitters, for example ultrasound or laser light, facing the surface of the material contained in order to allow to appropriate receivers to estimate the distance from said surface, and then obtain the level of the material and compare it with the reserve level to the achievement of which the reserve signal is issued.

One drawback of such level reserve detectors consists in that they are inaccurate, easily subject to malfunctions and errors for example caused by the soiling of the sources and laser receivers or by changes of the environmental physical characteristics and of the contained materials.

Another disadvantage consists in that the known meters are complex and expensive.

A further drawback consists in that the known gauges are hardly applicable to containers and equipment already installed or not prearranged at the origin.

The prior document no. DE3019365A1 refers to a dispenser device of coffee dust with a detector of low level of the dust coffee contained in a cylindrical container with a vertical axis. Such prior art document provides for a horizontal screw placed on the container bottom and eccentric with respect to the container itself and engaged in teeth perpendicularly protruding from a circular plate rotating about a vertical pin centrally placed with respect to the container bottom. The circular plate bears two protruding arms, upward and opposite inclined; one of the two arms is rigid and the other arm is flexible, elastic and straight in absence of flexure forces. The opposite ends of the two arms have respective magnets that are placed at a height approximately corresponding to the minimum level of coffee and alarm.

The wall of the container bears two magnetic switches, mutually in series connected and connected to the emission system alarm Such switches are of the same type and are fixed in diametrically opposite positions with respect to the container and at the same height of the magnets of the two arms.

In an operative condition the screw is in axial motion and actuates in rotation the two arms which ends equipped with magnets describe circular trajectories and, at least in absence of flexure forces, almost coinciding and lying on a horizontal plane placed at the height of the magnetic switches.

When the dust level is higher than the alarm level, the flexible and elastic arm is bent due to friction with the dust and the two switches are actuated in different instants and the connection circuit of the switches to the alarm system does not changes status and alarms are not issued.

When the dust is at the alarm level or below it, both arms are straight and opposite and the two magnets reach simultaneously the two switches causing a change of state and the emission of an alarm.

This known solution provides as indispensable elements two switches and two magnets and two arms, one of which elastic; in particular, removing one of the two arms, the device does not work. Furthermore, removing one of the switches or magnets or loosing the functionality of one of them, or removing the flexible arm or replacing it with an arm without springs or with a pivoting articulated arm, the device does not work. Then this known solution thus has a degree of complexity affecting cost and reliability.

The horizontal circular plate with the perpendicular teeth is slightly complex and expensive to realize. Furthermore this known solution is suitable only to cylindrical or almost cylindrical shape container or a regular polygonal section and it is not fit for irregular shape containers, for example with an elongated rectangular base. The arrangement necessarily eccentric of the screw, which also acts as dust outlet carrier, fox constraints to the device configuration downstream of the screw itself especially if it is of integral type.

Finally, the configuration of this known device makes very complex and difficult to change the alarm level and makes very hard its implementation in existing containers.

An object of the present invention is to propose a magnetic level indicator device for a not compact solid product in a container virtually free from contamination, clogging and in general from malfunctions.

Another purpose is to propose a simple, reliable and inexpensive device.

Further object is to propose a device that is almost not sensitive to the type, to the particle size and to the conditions of the material of the container, immune to noises and able to provide a reliable reserve level signal.

Another purpose is to propose a device that is easily applicable also to already installed and/or not predisposed containers.

Further object is to propose an extremely simple and reliable device that requires only one switch, only one magnet and which does not necessarily requires elastic elements.

Another purpose is to propose a device whose organs assigned to the alarm function are achievable using simple pressing or shearing without requiring complex and expensive equipment and production phases.

Further object is to propose a device fit to containers of almost any form also irregular or with elongated rectangular base.

Another purpose is to propose a device associable with screws anyway arranged and in a median or eccentric position with respect to the base of the container.

Further object is to propose a device that allows to easily modify the alarm level.

The characteristics of the invention are highlighted in the following with particular reference to the accompanying drawings in which:
- Figure 1 shows a schematic and in section view of the magnetic level indicator device for a not compact solid product in a container of a level of a not compact solid product in a container object of the present invention in a condition of level of the material exceeding a predetermined threshold reserve;
- Figure 2 shows a view of the device of Figure 1 in a condition of level lower in respect to the reserve level.

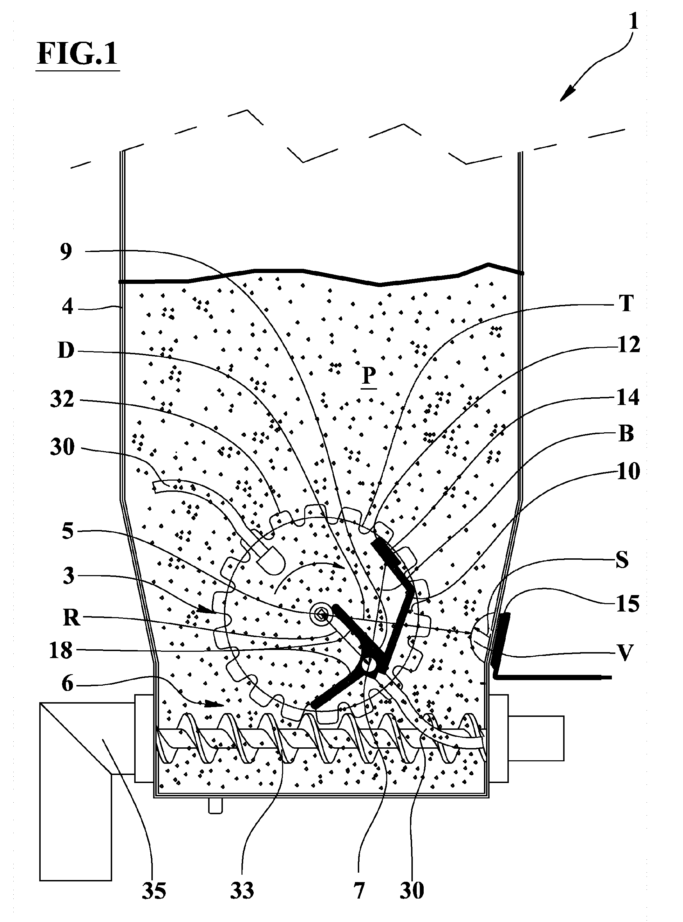

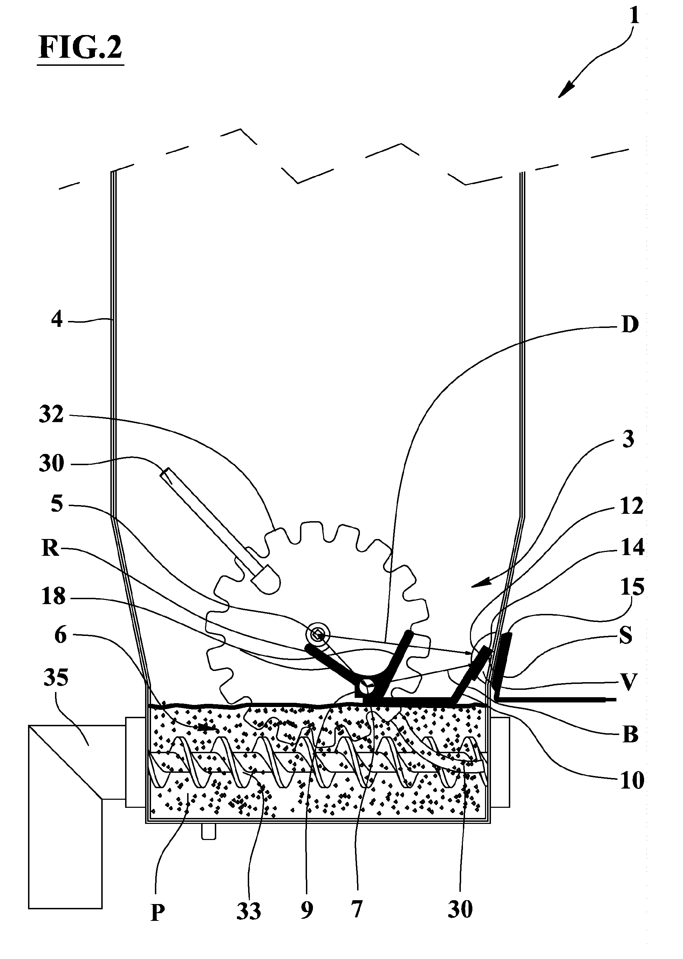

With reference to figures 1 and 2, with 1 is indicated the magnetic level indicator device for a not compact solid product in a container P , object of the present invention.

The device 1 is associated with or is associable to a container of any cylindrical or prismatic shaped. For example, but not exclusively, said container can be parallelepiped shaped, made of plastic material and comprising, at its base, the dispenser means and/or doser means of the not compact solid product, for example powder, granules, micropellets, sands, microcrystals, fragments, etc.. housed in the same container.

The container 4, by way of example illustrated in Figures 1 and 2, may be of the type adopted in machines for beverages. Such machines may include one or more of such containers for soluble powder of coffee, milk, tea, chocolate or other dehydrate products and comprise at least dispensers, heaters and mixers that are actuated by control means of the machine for serving drinks obtained by the hydration of one or more powders, such as coffee, made from a single corresponding powder, and cappuccino made from coffee and milk powder.

To clarify one aspect of the invention, it is observed that in the absence of a signal that alerts the control means of that a certain powder ingredient has dropped below the reserve level or is finished, in case of payment and order of a beverage based on or composing the deficient or missing ingredient, the machine will dispense a glass of hot water or a glass of incomplete beverage. Thus the invention allows, inter alia, of not accepting payments for beverages not available. Coming out of the exemplificative scope of the embodiment of the invention shown and described here, it is easy to understand how the lack of a reliable backup or exhaustion signal can lead serious consequences if the container is adopted in the chemical, pharmaceutical, food, materials plastics industry, etc..

Returning to the exemplificative illustrated form of the invention, the channel-shaped dispenser means and/or dosing means of the solid product P placed on the bottom of the container 4, comprise a motorized screw 33 placed horizontally in the channel of the bottom of the container 4 and aligned to an outlet duct 35 for the material of the container; where the actuation of the motorized screw is effected by the control means to deliver predetermined doses the powder product P through the outlet duct 35.

It is also provided a stirrer, assigned to prevent the powder agglomeration, comprising a wheel or a disc 3 whose main journal 5, or rather rotation shaft, is horizontally oriented and disposed perpendicularly to the axis of the motorized screw and has ends supported by respective bearing, or rather bushing means, fixed to the internal faces of two opposite walls of the container 4. The disc lies on a geometric vertical plane and is free to rotate about its horizontal shaft main journal 5 or said main journal 5 is free to rotate in the respective bushing means.

The disc is optionally provided with radial arms 30 of flexible type and assigned to the agitation of the material of the container as a result of rotation of said disc.

The disc 3 is peripherally provided with a ring of radial tooth 32 meshing to the helicoid of the motorized screw 33. The meshing of the toothed ring 32 with the helicoid of motorized screw 33 constitutes the rotation means 6 that, at each product dispensing, rotate the disc causing the agitation of the powder product P by the optional flexible radial arms, for example made of piano wire wrapped as helicoid spring.

The disk with its radial toothed ring can be made of die cut plate or sheet of metallic or composite plastic material, or by means of injection in a press-forging with a to shells die of simple construction.

The disc has an eccentric crankpin 7 parallel to the main journal 5 and is therefore horizontal and said disc constitutes, together with said crankpin 7 and main journal 5, a crankshaft means 3.

The eccentric crankpin 7 of the a crankshaft means 3, which as seen has the respective rotation axis parallel to the main journal 5, supports in a freely rotatable manner a big end 9 of a connecting rod means 10 whose small end 12 bears a magnetic means 14.

The connecting rod means 10 is equipped with an arm means 18 protruding from the big end 9 in the opposite direction to the small end 12. Such arm means 18 is in the shape of "V" or "U" and the main journal 5 is interposed between the legs of said arm means 18 constraining the connecting rod means 10 between two of contact extreme conditions where the main journal 5 matches with one or the other leg of the arm means 18.

The connecting rod means 10 thus has an overall shape approximately at "Y" with the rotation seat for the eccentric crankpin 7 placed at the junction of the three legs.

The leg of the connecting rod means bearing the magnetic means can be bent or curved with convexity towards the outside of the container to improve the behavior of the connecting rod means among the container material.

Preferably the connecting rod means 10 is made of metal sheet or plate in aluminum or non-magnetic steel or synthetic material, cut and molded or made in fusion. The material of the connecting rod means has a specific weight similar to the specific weight of the steel or in any case sufficient or it may be ballasted.

The connecting rod means 10 is constrained to rotate about the main journal 5 and the eccentric crankpin 7 which are horizontal and it 10 lies on a vertical plane perpendicular to such pins.

The device 1 also comprises a magnetic detector means 15 fixed to the container 4 or in proximity of the container 4 itself. More in detail, the magnetic detector means 15 is directly fixed to the external face of a side wall of the container 4 or incorporated in or fixed to that face, for example by means of a support or fastening of the container itself or of the machines for drinks, near the container wall. The fastening of the magnetic detector means 15 by a support of the machine to which is associable the container, allows positioning such magnetic detector means close enough to the container for a good operation of the device while still allowing the removal of said container 4 without having to interrupt the data cable binding, for example of electric type, between the magnetic detector means and the control means.

The range of the magnetic detector 15, or rather the distance at which it is able to detect the magnetic means 14, depends on its intrinsic sensitivity and on the intensity of the magnetic flux generated by the magnetic means 14 and the invention provides that such range extends toward the main journal 5 in a volume V extending inside the container.

In the field of the present description such volume V of range can be can approximated to a portion of a sphere centered on the container wall in proximity of the magnetic detector 15 and having at least a predetermined radius S. For example the radius S can be limited between a quarter and a twentieth of the greater dimension of the cross section of the container.

The magnetic detector means 15 is placed on a geometrical plane perpendicular to the rotation axes of the pins of the crankshaft means 3 and passing through the central portion of the magnetic means 14 and, in the operative condition of the machine equipped with the device is approximately at the same height of the main journal 5.

The length B of the connecting rod means 10, or rather the distance between the big end 9 and the magnetic means 14, is approximately equal to or greater than the difference between the distance D that separates the main journal 5 by the volume of the range of the magnetic detector means 15 and the distance R elapsing between said main journal 5 and the eccentric crankpin 7. In any case the length of the connecting rod means 10 is limited so as to prevent the block of rotation of the crankshaft means. The configuration and the length B of the connecting rod means 10 are such that, in an operative condition of the powder level higher than the predetermined level of reserve or alarm, the trajectory of the magnetic means 14 is within a circle centered on the main journal 5 and having radius T lower to the distance D that separates the main journal 5 from the volume V of the sensitivity range of the magnetic detector means 15.

In other words the radius S of the volume V is lower to a predetermined maximum value of interference with the trajectory, having radius T and centered on the main journal 5, swept by the magnetic means 14 in the operative condition of the powder level higher than the predetermined level of reserve or alarm. The latter obvious and implicit limit to the radius S of the volume V depends on the shape of the connecting rod means, on the nature of the container contents, on the rotation speed of the crankshaft means 3 and also from the environmental condition and cannot be expressed exclusively in numerical terms. In such way, and contrary to what happens in the above prior document, the magnetic detector means 15 is activated by the magnetic means 14 only when the powder level is equal to or lower than the predetermined level of reserve or alarm.

The invention preferably provides that the magnetic means 14 consists of a neodymium magnet and the magnetic detector means 15 consists of a Reed or Hall effect transistor complete with respective polarization circuit and signal processing.

As seen the main journal 5 of the crankshaft means 3 is supported by bushing means fixed to the container wall and the magnetic detector means 15 is fixed in a rigid or adjustable manner, to the container wall.

The split configuration of the arm means 18, which gives to the connecting rod means 10 an "Y" shape, and the constraint due to the contact of the legs of the arm means 18 with the main journal, give to the connecting rod means 10 in transit in front of the magnetic detector means 15 two possible positions, in which it is respectively near and far away from the magnetic detector means 15, the stability of which depends only on the presence or absence of the powder above the predetermined level of reserve or alarm.

The operation of the device provides that, in a control condition of the level or rather during dispensing of the product P, the presence in the container 4 of material above the predetermined level prevents, during the rotation, the approach of the magnetic means 14 to the magnetic detector means 15; vice versa, if the level of the material is lower, the magnetic means 14 can move and encounter with the magnetic detector means 15 or close to it 15 at a distance lower to its 15 sensitivity radius S; consequently the magnetic detector means 15 emits a signal of reaching of said predetermined level that the control means will develop for example to refuse orders which involve the use of the lacking product and possibly to exhibit to the public unavailability alerts and/or to send a telematics alarms to the employees.

The rotation of the connecting rod means 10 with the passage of the magnetic means 14 from the position spaced apart from the magnetic detector means 15 up to the approach and/or abutment to the magnetic detector means 15 may happen by virtue of the connecting rod means 10 weight. Is optionally provided a possible spring, not shown, which exerts on connecting rod means 10 an elastic force directed towards the magnetic detector means 15.

It is provided that the invention may be obtained by the construction and mounting of the all parts and components above described in the manufacturing phase or that the invention can be adopted, such as implementation on installed prepared or not prepared machines, by applying to a vertical disc of a container equipped with a stirrer, the connecting rod means with the magnet means and fixing to the container the magnetic detector means with simple operations that can be performed in the installation site.

Obviously, as an alternative, it is provided that the half crankshaft (3) and the respective rotation means (6) are independent and/or separated by possible stirrer or output dispenser and which are exclusively dedicated to the handling of the connecting rod means. In such case the crankshaft means (3) may take various forms, such as a crank. Such alternative embodiment of the invention finds application, as well as in the field of machines for drinks, in the fields of agro-industrial, chemical, plastics, ceramics, pharmaceutical and other.

An advantage of the present invention is to provide a magnetic level indicator device of a not compact solid product in a container virtually free from soiling, clogging and in general from malfunctions.

Another advantage is to provide a simple, reliable and inexpensive device.

Further advantage is to provide a device that is unaffected by the type, granulometry and conditions of the material of the container, immune to noise and able to provide a reliable level signal of the reserve level.

Another advantage is to provide a device that is easily applicable also to containers already installed and prearranged or not predisposed.

Further advantage is to provide an extremely simple and reliable device that requires only one switch, only one magnet and which does not necessarily requires elastic elements.

Another advantage is to provide a device whose organs assigned to the alarm function are achievable using simple pressing or shearing without requiring complex and expensive equipment and production phases.

Further advantage is to provide a device fit to containers of almost any form also irregular or with elongated rectangular base.

Another advantage is to provide a device associable with screws anyway arranged and in a median or eccentric position with respect to the base of the container.

Further advantage is to provide a device that allows to easily modify the alarm level.

## Claims

1. Magnetic level device for signalling a preset level of a not compact solid product housed in a container for such product in an operative condition of the device, **characterized by** comprising a crankshaft means (3) placed inside the container (4) and whose main journal (5) has a horizontal rotation axis fixed with respect to the container (4) and it (5) is actuated in rotation around at such axis by rotation means (6) at least in such operative condition, the eccentric crankpin (7) of the crankshaft means (3) has the respective horizontal rotation axis parallel to the rotation axis of the main journal (5) and it (7) supports in a freely rotatable manner a big end (9) of a connecting rod means (10) which small end (12) bears a magnetic means (14), and by comprising a magnetic detector means (15) fixed at least in proximity to the container (4), having a volume (V) of sensitivity range extending itself inside the container (4) at least of predetermined radius (S) lower than a predetermined maximum value and placed on a geometric plane perpendicular to the rotation axes of the crankshaft means (3) and passing through the central portion of the magnetic means (14) where the length (B) of the connecting rod means (10) or rather the distance between the big end (9) and the magnetic means (14) is equal to or greater than the difference between the distance (D) that separates the main journal (5) from said volume (V) of the sensitivity range of the magnetic detector means (15) in the container and the distance (R) between said main journal (5) and the eccentric crankpin (7), in the level checking condition, the presence in the container (4) of material above the predetermined level prevents the approaching and/or the abutment of the magnetic means (14) with the sensitivity range volume of the magnetic detector means (15); if the level is below, the magnetic means (14) can match with or enter into the sensitivity range volume of the magnetic detector means (15), which consequently emits a signal of reaching of said predetermined level.

2. Device according to claim 1 **characterized in that** the main journal (5) of the crankshaft means (3) is supported by bushing means fixed to the container wall and the magnetic detector means (15) is rigidly or adjustably fixed to the container wall.

3. Device according to claim 1 or 2 **characterized in that** the connecting rod means (10) is equipped with an arm means (18) protruding from the big end (9) in a direction opposed to the small end (12).

4. Device according to claim 3 **characterized in that** the arm means (18) is in the "V" or "U" form and the main journal (5) is interposed between the legs of such arm means (18) constraining the connecting rod means (10) between two extreme contact conditions of the main journal (5) with one or the other leg of the arm means (18).

5. Device according to claim 4 **characterized in that** the connecting rod means (10) is generally shaped roughly as "Y" with the rotation seat for the eccentric crankpin (7) placed at the junction of the three legs, the connecting rod means (10) being preferably made of cut and shaped metal sheet or metal plate or light alloy cast or synthetic organic materials also reinforced.

6. Device according to any of the previous claims **characterized in that** the connecting rod means (10) is bent or curved with convexity towards outside of the container.

7. Device according to any of the previous claims **characterized in that** the crankshaft means (3) consists of a wheel or of a disc, provided with radial arms (30) of the flexible type and assigned to the shaking of the material of the container following of said disc rotation.

8. Device according to claim 6 **characterized in that** the disc (3) is peripherally provided with a toothed ring (32) meshing the helicoid of a motorized screw (33) on the container (4) bottom and aligned to an outlet duct (35) for the material of the container; wherein the level checking condition is implemented at each dispensing of the material by the motorized screw (33) rotation.

9. Device according to any of the previous claims **characterized in that** the magnetic means (14) consists of a neodymium magnet and the magnetic detector means (15) consists of one between a Reed contact or a Hall effect transistor complete of respective biasing and signal processing circuit.

10. Device according to any of the previous claims **characterized in that** the material housed into the container (4) consists of a beverages product and that the container (4) is installed in a beverages dispensing machine.
